# EUROPEAN PATENT APPLICATION

(11) **EP 4 640 540 A1**
(43) Date of publication of application: **29.10.2025**
(21) Application number: 24184650.0
(22) Date of filing: 26.06.2024
(51) Int. Cl.: B62J 1/18, B62J 1/00, B29C 64/10

(54) **BICYCLE SADDLE WITH DIFFERENT STIFFNESS SECTIONS**

(30) Priority: 25.04.2024 TW 113115530
(71) Applicant: Velo Enterprise Co., Ltd., Taichung City 437 (TW)
(72) Inventor: YU, Tsai-Yun, Taichung 437 (TW)
(74) Representative: Straus, Alexander

(57) **Abstract**

A bicycle saddle (10) comprises a base (20) and a seat pad (30) connected to the top surface (22) of the base (20). The seat pad (30) includes a first support member (32) and a second support member (34), both separated by the longitudinal axis (X-X') of the base (20). Each of the support members (32)(34) includes a rear section (320)(340), a middle section (322)(342), and a front section (324)(344). The stiffness of each of the rear sections (320)(340) is greater than that of each of the front sections (324)(344), and the stiffness of each of the front sections (324)(344) is greater than that of each of the middle sections (322)(342).

## Description

### BACKGROUND

U.S. Patent No. 10,633,048 B2 discloses a bicycle saddle. This saddle includes a front section and a rear section. The rear section is stiffer than the front section to provide adequate support for the rider's ischial bones. In contrast, the front section has less stiffness, allowing for more comfortable support of the rider's genital area. U.S. Patent No. 11,787,490 B2 discloses another bicycle saddle. This saddle comprises three nested stiffness regions on either lateral side of the saddle. Each of the nested stiffness regions comprises an innermost region having a relatively low stiffness, a region surrounding the innermost region that has a somewhat higher stiffness, and another region surrounding the second region that has an even higher stiffness. The innermost region can be positioned at a point on the saddle that would generally experience the highest pressure from a rider's sit bones. Such a configuration can help to provide more consistent pressure around the rider's sit bones, as opposed to putting point loads on the sit bones, which can lead to decreased discomfort over time. These two patents each address some issues faced by cyclists, but they both have a significant shortcoming: how to ensure comfort in every riding position when the cyclist adopts different postures. These prior arts do not fully resolve this problem.

Additionally, U.S. Patent No. 6039395A discloses another bicycle saddle. This bicycle saddle includes two support members supported by a base component that connects the saddle to a bicycle. The support members are positioned on the base component in a laterally spaced apart arrangement along a longitudinal axis of the saddle, leaving an open area between the support members, thereby reducing pressure on the rider's perineum. However, the drawback of this bicycle saddle is that each component only has a single stiffness, which means it cannot ensure comfort for the rider in every riding position.

### SUMMARY

The heart of this invention lies in the inventor's insight that the contact points between a cyclist's body and the bicycle saddle vary with different riding postures. By adjusting the stiffness of the saddle in areas that might come into contact with the rider's body, it ensures that the cyclist remains comfortable in all postures. For example, when riding a bicycle in a leisurely manner, the rider has the greatest contact area with the seat, but puts minimal pressure on it. When the rider's upper body leans slightly forward, the main weight-bearing area remains the sit bones, but the pressure distribution becomes more even, with some pressure shifting to the middle part of the saddle. In a racing posture, the rider's upper body leans significantly forward, with pressure primarily concentrated on the perineal area (crotch) and the front part of the saddle.

Based on the above findings, some embodiments of the present invention include a bicycle saddle comprising a base and a seat pad. The base includes a top surface and a longitudinal axis. The seat pad comprises a first support member and a second support member, both of which are symmetrically disposed on the top surface of the base along the longitudinal axis thereof. Each of the support members has a rear section with a rear end and a first central point, a middle section with a second central point, and a front section with a front end and a third central point wherein the horizontal distance measured from the first central point to the rear end is greater than the horizontal distance measured from the second central point to the rear end, the horizontal distance measured from the central point to the rear end is greater than the horizontal distance measured from the third central point to the rear end. The degree of compressive deformation of the middle section is greater than that of the front section, and the degree of compressive deformation of the front section is greater than that of the rear section. Here, the term "degree of compressive deformation" refers to the extent of change in the shape of an object's surface when a certain amount of pressure is applied to it. According to the understanding of those with ordinary knowledge in the art, the degree of compressive deformation is inversely proportional to stiffness. Namely, the greater the degree of compressive deformation, the lower the stiffness. That is to say, that the stiffness of the middle section is less than that of the front section, and the stiffness of the front section is less than that of the rear section. Therefore, the bicycle saddle can provide sufficient support to the rider when riding in a leisurely manner, offer more comfortable support to the rider when his body leans slightly forward, and provide good support to the rider when adopting a racing posture.

Preferably, according to other embodiments of the present invention, the area of the rear section of each support member is greater than that of the middle and front sections, and the area of the middle section is greater than or equal to that of the front section.

According to several embodiments of the present invention, the length of each section of the support members along the longitudinal axis of the base (hereinafter referred to as the longitudinal length) is specifically designed for each riding posture. Specifically, the longitudinal length of the rear section is greater than that of the middle and front sections, while the longitudinal length of the middle section is greater than or equal to that of the front section.

According to further embodiments of the present invention, the base has a transverse axis perpendicular to the longitudinal axis. The width of each section of the support members along the transverse axis (hereinafter referred to as the transverse width) is also specifically designed for each riding posture. Specifically, each support member has an inner edge and an outer edge. The rear section has a maximum transverse width, defined as the straight-line distance between a point on the outer edge of the rear section farthest from the longitudinal axis and a point on the inner edge of the rear section closest to the longitudinal axis. The front section has a minimum transverse width, defined as a straight-line distance between a point on the outer edge of the front section closest to the longitudinal axis and a point on the inner edge of the front section closest to the longitudinal axis.

According to some embodiments of the present invention, the seat pad can comprise a resilient material, such as rubber, foam, elastomeric material, and/or the like. Additionally, in further embodiments, the seat pad is manufactured using 3-D printing technology. This manufacturing method allows the stiffness of specific areas of the seat pad to be determined by various three-dimensional lattice structures with different sizes, shapes, orientations, spacings, and densities.

### BRIEF DESCRIPTION OF THE DRAWINGS

Other features and advantages of the present invention will become readily apparent to those skilled in the art from the following detailed description of the embodiments in the light of the accompanying drawings. The illustrated embodiments, however, are merely examples and are not intended to be limiting. Like reference numbers and designations in the various drawings indicate like elements.
FIG. 1 is a perspective view of an embodiment of a bicycle saddle according to the present invention;
FIG. 2 is an exploded perspective view of the bicycle saddle shown in FIG. 1;
FIG. 3 is a side view of the bicycle saddle shown in FIG. 1;
FIG. 4 is a back view of the bicycle saddle shown in FIG. 1;
FIG. 5 is a bottom view of the bicycle saddle shown in FIG. 1;
FIG. 6 is a top view of the bicycle saddle shown in FIG. 1; and
FIG. 7 is a picture of a finished product of the bicycle saddle shown in in FIG.

### DETAILED DESCRIPTION

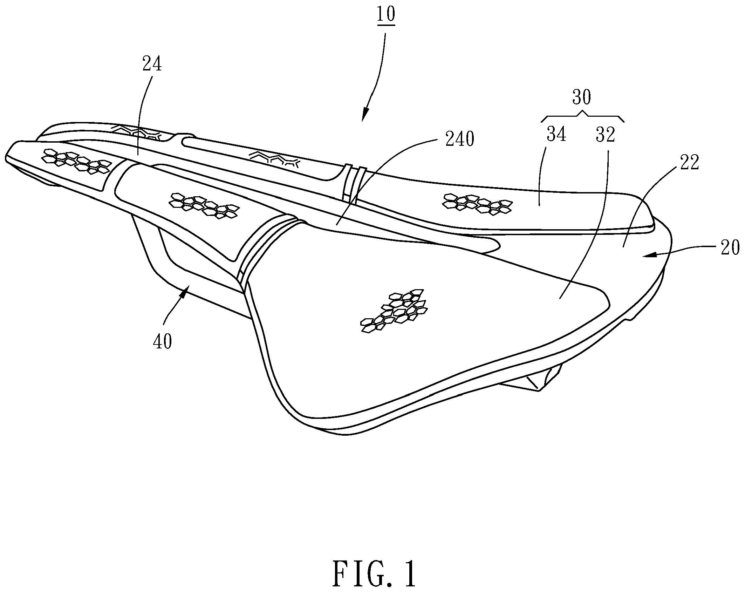

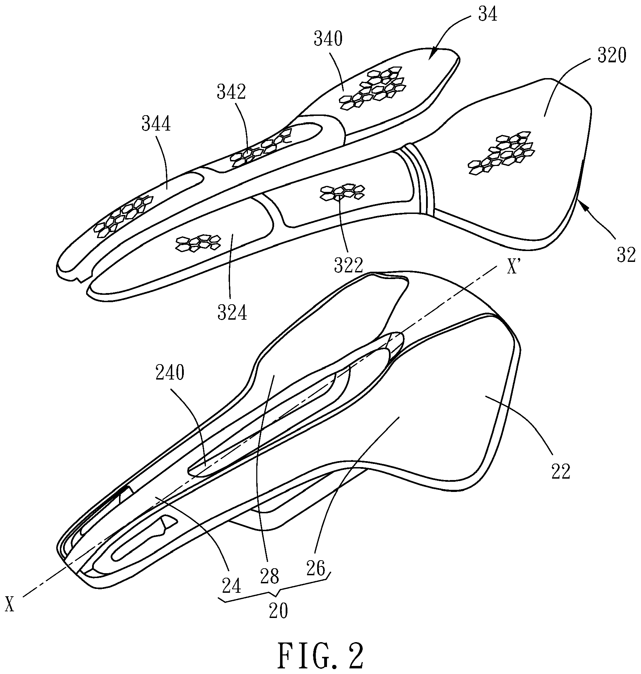

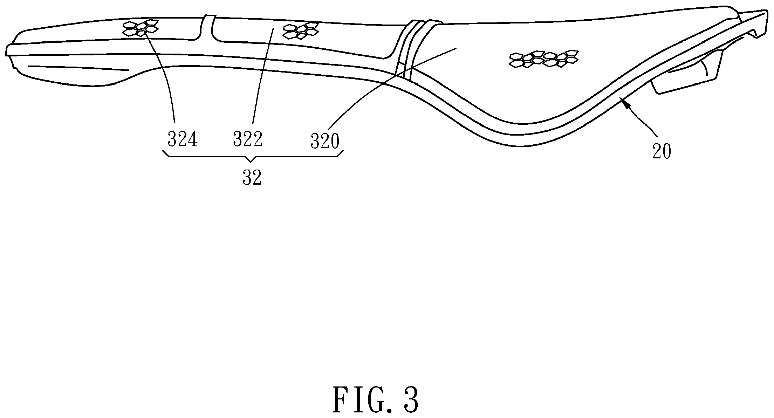

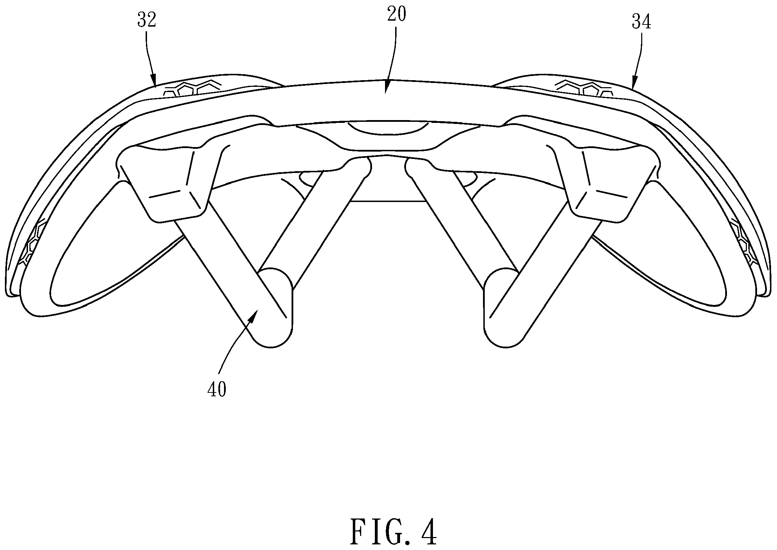

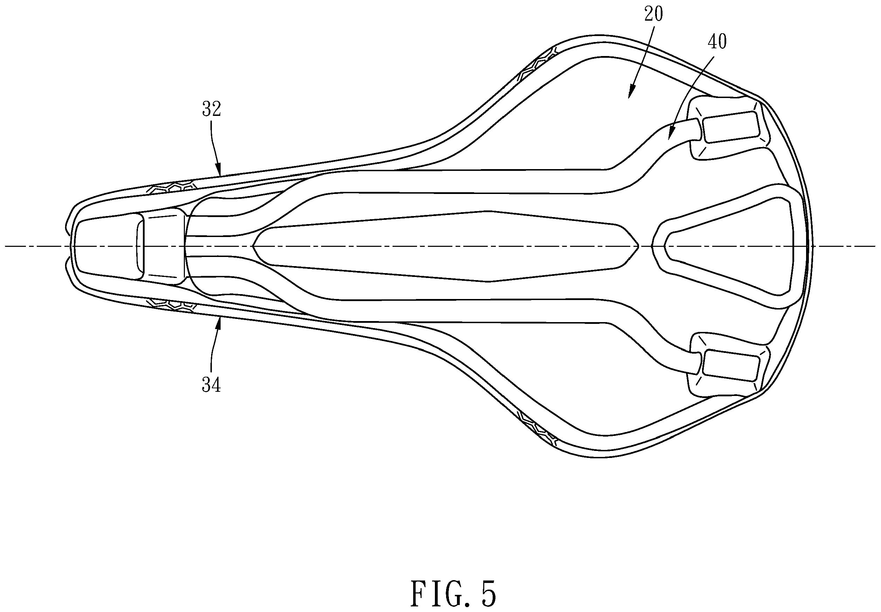

FIG.1 to FIG.5 illustrate a bicycle saddle 10 embodied according to the present invention. The bicycle saddle 10 comprises a base 20 and a seat pad 30. The base 20 includes a top surface 22, a longitudinal axis X-X' and a transverse axis Y-Y' perpendicular to the longitudinal axis X-X'. The bicycle saddle 10 may further include a support frame 40, which can be configured to be connected to the base 20 and be coupled to a bicycle, such as, for example, at a bicycle seat post.

The base 20 is configured to support the seat pad 30 and typically is made of materials such as plastic, carbon fiber, metal, and/or the like. In this embodiment, the base 20 includes a concave central portion 24 extending along the longitudinal axis X-X', a left portion 26 and a right portion 28 on either side of the central portion 24. The central portion 24 has an elongated slot 240 along the longitudinal axis X-X' for ventilation or pressure relief.

The seat pad 30 is used to comfortably support the rider's contact areas with the bicycle saddle 10 during riding, such as the ischial bones or buttocks. It generally includes elastic materials such as rubber, foam, or other similar substances, and can be manufactured using 3D printing technology or non-3D printing technology.

The seat pad 30 includes a first support member 32 and a second support member 34. The first support member 32 fully or partially covers or attaches to a section of the top surface 22 located on the left portion 26 of the base 20, while the second support member 34 fully or partially covers or attaches to another section of the top surface 22 located on the right portion 28 of the base 20.

In this embodiment, the first support member 32 includes a rear section 320, a middle section 322, and a front section 324. The second support member 34 includes a rear section 340, a middle section 342, and a front section 344. Since the first support member 32 and the second support member 34 are symmetrical in shape and size, only the first support member 32 will be described below.

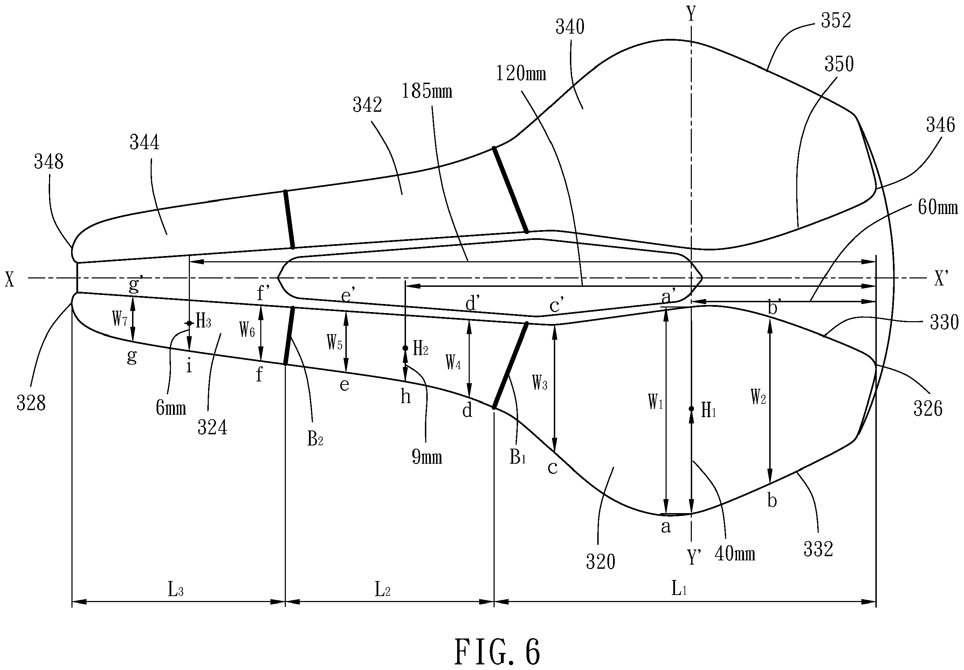

The rear section 320 and the middle section 322, as shown in FIG.6, are separated by a first black line B1, and the middle section 322 and the front section 324 are separated by a second black line B2. The area of the rear section 320 is approximately 4624.84 mm2, the area of the middle section 322 is approximately 2072.70 mm2, and the area of the front section 324 is approximately 1477.90 mm2.

The following will further define sections 320, 322 and 324 by their longitudinal length and transverse width. Here, the term "longitudinal length" refers to the length parallel to the longitudinal axis X-X', while "transverse width" refers to the width parallel to the transverse axis Y-Y'. In this embodiment, the support member 32(34) has a rear end 326 (346), a front end 328(348), an inner side edge 330 (350) and an outer side edge 332(352). The first longitudinal length L1 of the rear section 320 is measured from the rear end 326 to the first black line B1, and is approximately 104 mm. The second longitudinal length L2 of the middle section 322 is measured from the first black line B 1 to the second black line B2, and is approximately 70 mm. The third longitudinal length L3 of the front section 324 is measured from the second black line B2 to the front end 328, and is approximately 66 mm.

The rear section 320 has a first transverse width W1, a second transverse width W2 and a third transverse width W3. The first transverse width W1 is measured from the outermost point a on the outer side edge 332 to the innermost point a' on the inner side edge 330, and is approximately 67 mm. This is also the maximum transverse width of the first support member 32. The transverse width of the rear section 320 gradually decreases from the maximum width towards both sides. For example, the second transverse width W2 is measured from a point b on the outer side edge 332 to a point b' on the inner side edge 330, and is approximately 40 mm. The third transverse width W3 20 is measured from a point c on the outer side edge 332 to a point c' on the inner side edge 330, and is approximately 29 mm.

The middle section 322 has a fourth transverse width W4 and a fifth transverse width W5. The fourth transverse width W4 is measured from a point d on the outer side edge 332 to a point d' on the inner side edge 330, and is approximately 25.4mm. The fifth transverse width W5 is measured from a point e on the outer side edge 332 to a point e' on the inner side edge 330, and is approximately 17.3mm.

The rear section 324 has a sixth transverse width W6 and a seventh transverse width W7. The sixth transverse width W6 of the rear section 324 is measured from a point f on the outer side edge 332 to a point f' on the inner side edge 330, and is approximately 16.4 mm. The seventh transverse width W7 of the rear section 324 is measured from a point g on the outer side edge 332 to a point g' on the inner side edge 330, and is approximately 9.3 mm.

In this invention, the rear section 320, the middle section 322, and the front section 324 each have different stiffness. Here, the term "stiffness" is defined based on the varying amounts of deformation after compression. In this embodiment, a cylinder with a diameter of 30 mm is used to apply a load of 200 newton at the central points H1, H2, and H3, respectively.

More specifically, the horizontal distance from H1 to the rear end 326 is approximately 60 mm, and the vertical distance to point a is approximately 40 mm. The horizontal distance from H2 to the rear end 326 is approximately 120 mm, and the vertical distance to point h is approximately 9 mm. The horizontal distance from H3 to the rear end 326 is approximately 185 mm, and the vertical distance to point i is approximately 6 mm.

Then, the deformation of each section 320, 322, and 324 after compression is measured. The measurement results show that the compressive deformation for the rear section 320 is 5.1± 0.3 mm, for the middle section 322 is 6.0± 0.3 mm, and for the front section 324 is 5.5±0.3 mm. In other words, the rear section 320 has the least compressive deformation and therefore the greatest stiffness, providing sufficient support for the rider's ischial bones. The middle section 322 has the greatest compressive deformation and therefore the least stiffness, offering more comfortable support for the soft tissue areas in contact with the bicycle saddle. The front section 324 has compressive deformation that is between the rear section 320 and the middle section 322, so its stiffness is also intermediate. This provides good support when the rider needs to lean forward and exert force on the pedals. Additionally, the stiffness between sections 320, 322, and 324 may be changed gradually.

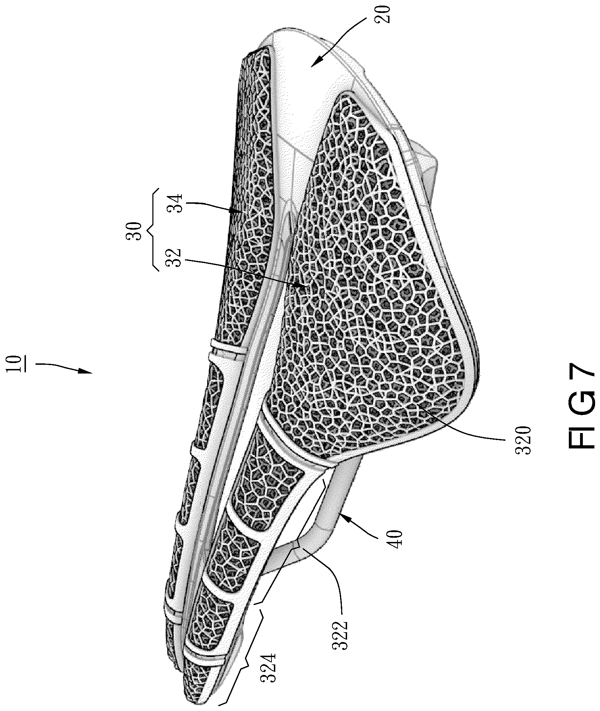

Finally, referring to FIG. 7, it shows a photograph of the bicycle saddle 10. The seat pad 30 includes a three-dimensional lattice structure using 3D printing technology, and the material used is a mixture of ultraviolet curable resin and elastomeric polyurethane. As shown in the photograph, the three-dimensional lattice structure of the rear section 320 has the highest density, thus having the greatest stiffness. The middle section 322 has the lowest density, thus having the least stiffness, while the front section 324 has a density between the rear section 320 and the middle section 322, and naturally, its stiffness is also intermediate.

## Claims

1. A bicycle saddle (10), comprising:
a base (20) including a top surface (22) and a longitudinal axis (X-X');
a seat pad (30) connected to the top surface (22);
**characterized in that**:
the base (20) includes a left portion (26) and a right portion (28) on either side of the longitudinal axis (X-X');
the seat pad (30) comprises a first support member (32) and a second support member (34);
the first support member (32) is disposed on the left portion (26) of the base (20), and the second support member (34) is disposed on the right portion (28) of the base (20);
each of the support members (32) and (34) has a rear section (320) (340) with a rear end (326) (346) and a first central point (H1), a middle section (322) (342) with a second central point (H2), and a front section (324) (344) with a front end (328) (348) and a third central point (H3);
the horizontal distance measured from the third central point (H3) to the rear end (326)(346) is greater than the horizontal distance measured from the second central point (H2) to the rear end (326) (346), and the horizontal distance measured from the second central point (H2) to the rear end (326) (346) is greater than the horizontal distance measured from the third central point (H3) to the rear end (326) (346); and
the stiffness of each of the rear sections (320)(340) is greater than that of each of the front sections (324)(344), and the stiffness of each of the front sections (324) (344) is greater than that of each of the middle sections (322) (342).

2. The bicycle saddle (10) of claim 1, **characterized in that** the area of each of the rear sections (320)(340) is greater than that of each of the middle sections (322) (342) and each of the front sections (324) (344), and the area of each of the middle sections (322) (342) is greater than or equal to that of each of the front sections (324) (344).

3. The bicycle saddle (10) of claim 1, **characterized in that** each of the support members (32) (34) has a rear end (326) (346) and a front end (328)(348), each of the rear sections (320)(340) and each of the middle sections (322) (342) are separated by a first black line (B1), and each of the middle sections (322) (342) and each of the front sections (324) (344) are separated by a second black line (B2), a first longitudinal length (L1) of each of the rear sections (320)(340) measured from each of the rear ends (326)(346) to the first black line (B1) is greater than a second longitudinal length (L2) of the middle section (322)(324) measured from the first black line (B1) to the second black line (B2), and the second longitudinal length (L2) of each of the middle sections (322)(342) is greater than or equal to a third longitudinal length (L3) of the front section (324) (344) measured from the second black line (B2) to each of the front ends (328)(348).

4. The bicycle saddle (10) of claim 1, **characterized in that** each of the support members (32) (34) has an inner edge (330)(350) and an outer edge (332)(352), each of the rear sections (320)(340) has a maximum transverse width (W1) measured from the first outermost point (a) on each of the outer edge (332)(352) of each of the rear section(320)(340) to the first innermost point (a') on each of the inner edge(330)(350) of each of the rear section(320)(340), and each of the front section(324) (344) has a minimum transverse width (W7) measured from the second outermost point (g) on each of the outer edge (332)(352) of each of the front section(324) (344) to the second innermost point (g') on each of the inner edge(330)(350) of each of the front section(324) (344).

5. The bicycle saddle (10) of claim 1, **characterized in that** the base (20) further includes a concave central section (24) extending along the longitudinal axis (X-X').

6. The bicycle saddle (10) of claim 4, **characterized in that** the concave central section (24) has an elongated slot (240) along the longitudinal axis (X-X').

7. The bicycle saddle (10) of claim 1, **characterized in that** the seat pad (30) includes a three-dimensional lattice structure made by 3D printing technology.

8. The bicycle saddle (10) of claim 7, **characterized in that** the density of the three-dimensional lattice structure of each of the rear section (320) (340) is greater that of the three-dimensional lattice structure of each of the front section (324)(344), and the density of the three-dimensional lattice structure of each of the front section (324)(344) is greater than that the three-dimensional lattice structure of each of the middle sections (322) (342).
